# EUROPEAN PATENT SPECIFICATION

(11) **EP 2 601 225 B1**
(45) Date of publication and mention of the grant of the patent: **04.11.2015**
(21) Application number: 11814963.2
(22) Date of filing: 30.06.2011
(51) Int. Cl.: C08F 10/14, C08L 23/18, C10M 143/08

(54) **SHEAR-STABLE HIGH VISCOSITY POLYALPHAOLEFINS**
SCHERSTABILE POLYALPHAOLEFINE VON HOHER VISKOSITÄT
POLYALPHAOLÉFINES DE GRANDE VISCOSITÉ STABLES AU CISAILLEMENT

(30) Priority: 04.08.2010 US 370616 P
(43) Date of publication of application: 12.06.2013
(73) Proprietor: ExxonMobil Chemical Patents Inc., Baytown, TX 77520 (US)
(72) Inventor: WU, Margaret, M., Skillman NJ 08558 (US); STAVENS, Kevin, B., Houston TX 77025 (US); HAN, Wenning, W., Houston TX 77008 (US); PATIL, Abhimanyu, O., Westfield NJ 07090 (US)
(74) Representative: Mareschal, Anne
(86) International application number: PCT/US2011/042503
(87) International publication number: WO 2012/018463

(56) References cited:
- WO-A1-03/020856
- WO-A2-2008/010865
- US-A1- 2009 005 279
- US-A1- 2009 247 442

## Description

### CROSS REFERENCE TO RELATED APPLICATIONS

This application claims priority to United States Patent Application No. 61/370,616, filed August 4, 2010, which claims priority to United States Patent Application No. 12/388,794, filed February 19, 2009, which claims priority to United States Provisional Patent Application No. 61/040,855 filed March 31, 2008, all of which are hereby incorporated by reference in their entirety.

### FIELD OF THE INVENTION

The invention relates to high viscosity polyalphaolefins (PAO). Specifically, the present invention relates to high viscosity PAOs that have very small portions of high molecular weight molecules and which are very shear stable.

### BACKGROUND OF THE INVENTION

Lubricant viscosity is an important element for equipment builders and automotive manufacturers to consider. The viscosity of the lubricant is directly related to the thickness of the protective lubricant film formed in service. The viscosity of the lubricant also affects its circulation rate in small passageways in the lubricated equipment. Equipment components are therefore selected and designed to be used with lubricants of a specified viscosity. Maintenance of the desired lubricant viscosity is therefore critical for proper operation of lubricated equipment.

Resistance to lubricant breakdown is desirable for lubricants in service. Lubricants decompose via a number of different mechanisms or pathways: thermal, oxidative and hydrolytic mechanisms are well known. During thermal and hydrolytic decomposition, the lubricant is usually broken down into smaller fragments. During oxidative decomposition, higher molecular weight sludges are often formed. In each of these pathways, byproducts are also formed, often acids. These byproducts can catalyze further degradation, resulting in an ever increasing rate of degradation.

Since the lubricant viscosity is affected by the various decomposition pathways, and maintenance of lubricant viscosity is critical, lubricant viscosity is frequently checked in almost all lubricant applications. The in-service viscosity is compared against the fresh oil viscosity to detect deviation indicative of degradation. Viscosity increase and viscosity decrease are both signs of potential lubricant degradation.

In industrial lubricant application, lubricant viscosity is classified by ISO viscosity grade. ISO Viscosity Grade standards have a ± 10% window centered around the specified viscosity. For example, lubricants with a viscosity of 198 cSt and 242 cSt would be considered just in-grade for the ISO VG 220 specification. Lubricants which fall out of the ISO VG specifications may still be effective lubricants in service. However, since known degradation mechanisms result in viscosity changes, many equipment owners will replace lubricants which fall outside of the ISO VG limits. This decision may also be driven by such factors as equipment warranty or insurance requirements. Such considerations may be very important for expensive industrial equipment. The cost of downtime for lubricant related failures can also play a role in the lubricant change-out decision.

Other lubricants, such as automotive engine lubricants or transmission fluids or automotive gear oil or axle lubricants or grease, are also classified by different viscosity ranges, as described by SAE (Society of Automotive Engineers) J300 or J306 specifications, or by AGMA (American Gear Manufacturers Association) specifications. These lubricants will have the same issues as industrial lubricants described in previous paragraph.

One benefit of premium lubricants is the potential for extended life, reducing the change-out interval. Extended lubricant life is one feature that offsets the higher initial fill cost for premium lubricants. In order to achieve an extended lubricant life, premium lubricants must demonstrate a more stable viscosity in service. Using higher quality base stocks and advanced additive systems, these lubricants counter the effects of thermal, oxidative and hydrolytic attack.

In addition to the chemical mechanisms for viscosity change discussed above, however, another mechanism for viscosity change is mechanical in nature. Viscosity loss due to severe shear stress in a lubricant occurs when lubricant molecules are fractured in high shear zones in the equipment. These zones exist in many loaded gears, roller bearings, or engine pistons at high rpm. As lubricant is circulated through these zones, different parts of the lubricant base stock molecules are subjected to different mechanical stress, causing the molecules to permanently break down into smaller pieces, resulting in reduction in lubricant viscosity. This shear viscosity breakdown is specifically problematic with high viscosity lubricant base stocks due to their high molecular weight components.

A sheared-down lubricant may still retain excellent resistance to thermal, oxidative or hydrolytic degradation; however, a lubricant with out of range viscosity may fail to provide the desired film thickness. On the other hand, a sheared-down lubricant may initiate other undesirable degradation processes, such as oxidation, hydrolysis, etc., leading to reduced lubricant life time. Thus it is desirable to avoid the loss of viscosity by mechanical mechanism as well as chemical mechanisms discussed above.

The viscosity loss by mechanical shear down of a lubricant or lubricant base stock can be measured by several methods, including Tapered Roller Bearing (TRB) test according to CEC L-45-T-93 procedure, Orbahn (ASTM D3945) or Sonic Shear Tests (ASTM D2603). The TRB test is believed to correlate better to the actual field shear stability performance of viscous fluids than the other shear tests.

One important variable in determining susceptibility of a base stock to shear viscosity breakdown is its molecular weight distribution (MWD). Molecular weight distribution (MWD), defined as the ratio of weight-averaged MW to number-averaged MW (= Mw/Mn), can be determined by gel permeation chromatography (GPC) using polymers with known molecular weights as calibration standards. Typically, base stocks with broader MWD are more prone to shear viscosity breakdown than base stocks with narrower MWD. This is because the broad MWD base stock usually has a larger high molecular weight fraction, which breaks down easier in high stress zones than the narrow MWD base stock, which has a much lower high molecular weight fraction.

To obtain shear stable lubricants, it is therefore desirable to have a narrow MWD. One way to achieving narrow MWD is to use metallocene catalysts, which was discovered by Sinn and Kaminsky based on early transition metals (Zr, Ti, Hf) with methylaluminoxane (MAO). Soon after the appearance of metallocene catalysts in 1980 their advantages over the conventional multi-site Ziegler-Natta and chromium catalysts were recognized. Thus, they are highly active catalysts exhibiting an exceptional ability to polymerize olefin monomers, producing uniform polymers and copolymers of narrow molecular weight distribution (MWD of less than or equal to about 2) and narrow chemical compositional distribution, controlling at same time the resulting polymer chain architectures.

The use of single-site metallocene catalysts in the oligomerization of various alphaolefin feeds is known *per se,* such as in WO2007/011832, WO2007/011459, WO2007/011973, and WO2008/010865.

### SUMMARY OF THE INVENTION

Disclosed herein is a polyalphaolefin polymer. The polyalphaolefin polymer is derived from not more than 10 mol% ethylene and has a kinematic viscosity at 100° C of 135 cSt or greater. The polymer is characterized by not more than 1.5 wt% of the polymer having a molecular weight of greater than 45,000 Daltons and not more than 0.5 wt% of the polymer having a molecular weight greater than 60,000 Daltons, and by, after being subjected to twenty hours of a taper roller bearing test, the polymer having a kinematic viscosity loss of less than 9%. Thus, the polyalphaolefin is a shear stable polymer.

In one disclosed embodiment, the polyalphaolefin, after taper roller bearing testing, has a kinematic viscosity loss of not more than 5%. In another embodiment, the polyalphaolefin, after taper roller bearing testing, has a kinematic viscosity loss of not more than 1%.

The shear stable polyalphaolefin, prior to being subjected to the shearing forces of the taper roller bearing, the polyalphaolefin is characterized by not more than 1.5 wt% of the polymer having a molecular weight of greater than 45,000 Daltons.

The shear stable polyalphaolefin is also characterized by not more than 0.5 wt% of the polymer having a molecular weight of greater than 60,000 Daltons.

In one disclosed embodiment, the polyalphaolefin polymer has not more than 0.2 wt% of the polymer having a molecular weight of greater than 60,000 Daltons.

In another aspect of the invention, the polyalphaolefin polymer has not more than 0.10 wt% of the polymer having a molecular weight of greater than 45,000 Daltons.

In another aspect of the invention, the shear stable polyalphaolefin having not more than 0.5 wt% of the polymer with a MW of greater than 60,000 Daltons also, after being subject to the standard taper roller bearing testing, has a kinematic viscosity loss of not more than 5%.

For all of disclosed shear stable polyalphaolefin polymers, the polyalphaolefins have a kinematic viscosity at 100° C of 135 to 950 cSt. In another embodiment, the polyalphaolefins have a kinematic viscosity at 100° C of 135 to 600 cSt.

For all of the disclosed shear stable polyalphaolefins, the polyalphaolefin is produced by contacting a catalyst system comprising a metallocene, a non-coordinating anion activator, and an optional co-activator with a feedstock comprising at least one olefin, the at least one olefin selected from at least one linear alpha-olefins having a carbon number of 5 to 18 (C5 to C18).

Alternatively, for all of the disclosed shear stable polyalphaolefins, the polyalphaolefin may be subjected to mechanical breakdown to reduce any portions of the polymer having a molecular weight greater than 45,000 Daltons.

All of the polyalphaolefins disclosed herein within the scope of the present invention are suitable for being blended into gear oil, bearing oil, circulating oil, compressor oil, hydraulic oil, turbine oil, or machinery grease. Additionally, all of the disclosed polyalphaolefins within the scope of the present invention are useful in lubricants used in wet gearboxes, clutch systems, blower bearings, wind turbine gear boxes, coal pulverizer drives, cooling tower gear boxes, kiln drives, paper machine drives, and rotary screw compressors.

### BRIEF DESCRIPTION OF THE DRAWINGS

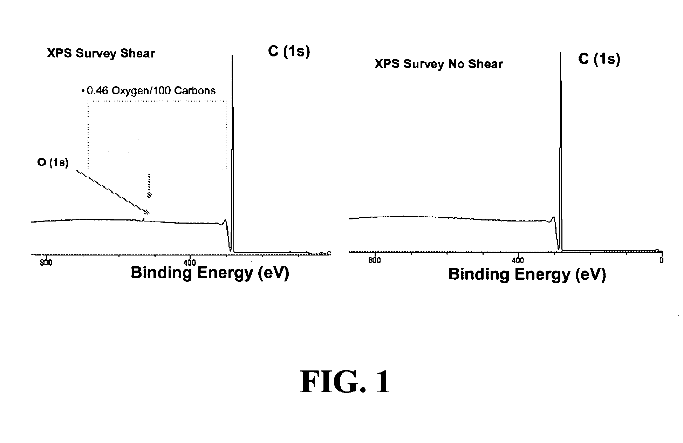

The invention will be described by way of example and with reference to the accompanying drawing, FIG. 1, in which X-ray photoelectron spectroscopy results for one sample is charted.

### DETAILED DESCRIPTION OF THE INVENTION

While the illustrative embodiments have been described with particularity, it will be understood that various other modifications will be apparent to and can be readily made by those skilled in the art without departing from the spirit and scope of the invention. Accordingly, it in not intended that the scope of the claims appended hereto be limited to the examples and descriptions set forth herein but rather that the claims be construed as encompassing all the features of patentable novelty which reside in the present invention, including all features which would be treated as equivalents thereof by those skilled in the art to which the invention pertains.

For purposes of this disclosure, and for the general understanding of viscosity values of polyalphaolefins, when a polyalphaolefin is defined as having a kinematic viscosity at a certain value, due to minor variations in the oligomerization or polymerization of the product, the actual measurable viscosity may be within ± 10% cSt. Thus, a PAO may be described as being a 150 cSt PAO and the actual measured viscosity may be 135 or 165. This is well known and understood by those in the art.

In accordance with the invention, while it is known that shear stability of a lubricant is a desired property, Applicants have determined that a more stable product is obtained by the significant reduction, or elimination, of the high molecular weight portion of the polymer produced. As is typical for most oligomerization and polymerizations, during the reaction, as the reacting monomers are being joined to form the product chain, the reaction may be terminated at any time. If the reaction is terminated early, the product chain has a lower molecular weight; if the reaction is terminated relatively later, the chain has a greater molecular weight. Thus, for any given reaction, the resulting product has an average molecular weight (Mw), and not a single molecular weight. The number average molecular weight (Mn) is the average of the molecular weights of the macromolecules of the resulting oligomer or polymer. The polydispersity value, i.e., molecular weight distribution, of the formed oligomer or polymer is the ratio of the weight average molecular weight to the number average molecular weight (Mw/Mn). The closer the value of the polydispersity of the product is to one, the product has a more narrow molecular weight concentration. If the polydispersity is exactly one, the product would be expected to be comprised of all equal chain lengths.

Due to the ability of the chain growth to continue until the entire reaction is terminated by external means, absent other factors, a portion of a polymer will have a relatively very high molecular weight. This portion of the polymer may be referenced as the high end tail of the molecular weight distribution. While this high end tail of the molecular weight distribution may be a minor portion of the polymer, in lubricant applications, under shearing conditions, it is this high end tail of the molecular weight distribution that is broken down or sheared by the applied forces, potentially reducing the lubricant properties, including the film thickness ability. For the low viscosity polyalphaolefins, those having a kinematic viscosity at 100 C, KV(100), of 100 cSt or less, during oligomerization, the reaction is terminated prior to the generation of such high tails. Thus, these lower viscosity PAOs have very little to no viscosity loss due to shearing forces.

In accordance with the present invention, the PAO has a KV(100) of 135 cSt or greater with a substantially minor portion of a high end tail of the molecular weight distribution. The reduction or elimination of the portion of the polymer at the high end tail of the molecular weight distribution in the PAO, provides the PAO, after the PAO has been subjected to shearing forces, with a kinematic viscosity loss of less than 9%.

The PAO has not more than 0.5 wt% of polymer having a molecular weight of greater than 60,000 Daltons. In another embodiment, the amount of the PAO that has a molecular weight greater than 60,000 Daltons is not more than 0.2 wt%. In yet another embodiment, this very high end tail of the molecular weight distribution is not more than 0.1 wt%. In yet another embodiment, the PAO may be absent or substantially absent of this very high end tail; 'substantially absent' herein being not more than 0.01 wt%.

In further reducing the high end tail of the molecular weight distribution of the polymer, the PAO has not more than 1.5 wt% of the polymer having a molecular weight of greater than 45,000 Daltons. In another embodiment, the PAO has not more than 1.0 wt% of the polymer having a molecular weight greater than 45,000 Datons. In other embodiments, the PAO has not more than 0.50 or not more than 0.10 wt% of the polymer having a molecular weight greater than 45,000 Datons. The above wt% of the molecular weight portions of the polymer are determined by GPC as described below. In yet another embodiment, the PAO may be absent or substantially absent of any portion having a molecular weight greater than 45,000 Daltons; 'substantially absent' herein being not more than 0.01 wt%.

By reducing or eliminating the high end molecular weight distribution of the polymer, as noted above, when the PAO is subjected to shear forces, the PAO experiences only minimal or no loss of kinematic viscosity. For some PAOs, when there is an absence of such high molecular weight components, the viscosity loss due to shear is zero or substantially zero (0.01%). In one embodiment, the KV(100) loss, after the PAO has been subjected to a 20 hour taper roller bearing test, is not more than 9%. In another embodiment, the KV(100) loss is not more than 5%. In yet other embodiments, the KV(100) loss is not more than 1% or not more than 0.5%. All of these loss percentages are determined after the PAO has been subjected to a 20 hour taper roller bearing test as described below.

The PAO have a KV(100) of 135 cSt or greater. In one embodiment, the KV(100) is in the range of 135 to 950 cSt. In yet another embodiment, the KV(100) is in the range of 135 to 600 cSt. In another embodiments, the KV(100) may be in the ranges of 135 to 500 cSt, 135 to 400 cSt, or 135 to 300 cSt.

The PAOs having a very minor amounts of the high end molecular weight distribution of the polymer as described above, may be obtained either by mechanical breakdown of the polymer to pre-shear the PAO or by selection of the catalyst system and controlling the reaction conditions.

### Feedstocks

PAOs comprise a well-known class of hydrocarbons manufactured by the catalytic oligomerization (polymerization to low-molecular-weight products) of α-olefin, preferably linear alpha-olefin, monomers. The monomers typically range from 1-hexene to 1-tetradecene, although 1-decene is typically preferred. One of the particular advantages of the process according to the present invention is that, in embodiments, the improvement is not only limited to pure 1-decene as feed, but also applies to wide range of mixed alpha-olefins as feed, including feeds comprising one or more of 1-hexene, 1-octene, 1-decene, 1-dodecene, and 1-tetradecene.

By "mixture" of alpha-olefins, it is meant that at least two different alpha-olefins are present in the feed. In embodiments where the feed is selected from C₅ to C₃₀ α-olefins, the feed will comprise anywhere from 2 to 25 different α-olefins. Thus, the feed may comprise at least two, or at least three, or at least four, or at least five, or at least six, or at least seven, or at least eight, and so on, different feeds. The embodiments may be further characterized by having no single α-olefin present in an amount greater than 80 wt%, 60 wt%, 50 wt%, or 49 wt%, or 40 wt%, or 33 wt%, or 30 wt%, or 25 wt%, or 20 wt%.

The amounts of α-olefin present in a feed will be specified herein as percent by weight of the entire amount of α-olefin in the feed, unless otherwise specified. Thus, it will be recognized that the feed may also comprise an inert (with respect to the oligomerization reaction in question) material, such as a carrier, a solvent, or other olefin components present that is not an α-olefin. Examples are propane, n-butane, iso-butane, cis- or trans-2-butenes, iso-butenes, and the like, that maybe present with propylene or with 1-butene feed. Other examples are the impurity internal olefins or vinylidene olefins that are present in the α-olefin feed.

Feeds may be advantageously selected from C₅ to C₂₄ α-olefins, C₅ to C₁₈, C₅ to C₁₆, C₆ to C₂₀ α-olefins, C₅ to C₁₄ α-olefins, C₅ to C₁₆ α-olefins, C₅ to C₁₆ α-olefins, C₆ to C₁₆ α-olefins, C₆ to C₁₈ α-olefins, C₆ to C₁₄ α-olefins, among other possible α-olefin feed sources, such as any lower limit listed herein to any upper limit listed herein. In other embodiments, the feed will comprise at least one monomer selected from propylene, 1-butene, 1-pentene, 1-hexene to 1-heptene and at least one monomer selected from C₁₂-C₁₈ alpha-olefins. In any embodiment of the feedstock to manufacture the inventive PAO, the amount of ethylene is not more than 10 mol%.

When employing a mixed feed, one acceptable mixed feed is a mixture of 1-hexene, 1-decene, 1-dodecene, and 1-tetradecene. Mixtures in all proportions may be used, e.g., from about 1 wt% to about 90 wt% 1-hexene, from about 1 wt% to about 90 wt% 1-decene, from about 1 wt% to about 90 wt% 1-dodecene, and from about 1 wt% to about 90 wt% tetradecene. In preferred embodiments, 1-hexene is present in the amount of about 1 wt% or 2 wt% or 3 wt% or 4 wt% or 5 wt% to about 10 wt% or 20 wt%, 1-decene is present in the amount of about 25 wt% or 30 wt%, or 40 wt%, or 50 wt% to about 60 wt% or 70 wt% or 75 wt%, 1-dodecene is present in the amount of about 10 wt% or 20 wt% or 25 wt% or 30 wt% or 40 wt% to about 45 wt% or 50 wt% or 60 wt%, and 1-tetradecene is present in the amount of 1 wt% or 2 wt% or 3 wt% or 4 wt% or 5 wt% or 10 wt% or 15 wt% or 20 wt% or 25 wt% to about 30 wt% or 40 wt% or 50 wt%. Ranges from any lower limit to any higher limit just disclosed are contemplated, e.g., from about 3 wt% to about 10 wt% 1-hexene or from about 2 wt% to about 20 wt% 1-hexene, from about 25 wt% to about 70 wt% 1-decene or from about 40 wt% to about 70 wt% 1-decene, from about 10 wt% to about 45 wt% 1-dodecene or from about 25 wt% to about 50 wt% 1-dodecene, and from about 5 wt% to about 30 wt% 1-tetradecene or from about 15 wt% to about 50 wt% 1-tetradecene. Numerous other ranges are contemplated, such as ranges plus or minus 5% (±5%) from those specified in the examples.

While minor proportions of other linear alphaolefins (α-olefin) may be present, such as 1-octene or 1-nonene, in the above embodiments the mixed feed (or mixture of alphaolefins contacting the oligomerization catalyst and promoters) consists essentially of 1-hexene, 1-decene, 1-dodecene, 1-tetradecene, wherein the phrase "consists essentially of" (or "consisting essentially of" and the like) takes its ordinary meaning, so that no other α-olefin is present (or for that matter nothing else is present) that would affect the basic and novel features of the present invention. In yet another preferred embodiment the feed (or mixture of alphaolefins) consists of 1-hexene, 1-decene, 1-dodecene, 1-tetradecene, meaning that no other olefin is present (allowing for inevitable impurities).

Another mixed feedstock useful in the present invention is a mixed feed of 1-hexene, 1-decene, and 1-tetradecene. Mixtures in all proportions may be used, e.g., from about 1 wt% to about 90 wt% 1-hexene, from about 1 wt% to about 90 wt% 1-decene, and from about 1 wt% to about 90 wt%. In preferred embodiments, the 1-hexene is present in amounts of 1 wt% or 2 wt% or 3 wt% or 4 wt% or 5 wt% to about 10 wt%, 20 wt%, 25 wt%, or 30 wt%, 1-decene is present in the amount of about 25 wt% or 30 wt%, or 40 wt%, or 50 wt% to about 60 wt% or 70 wt% or 75 wt%, and 1-tetradecene is present in the amount of 1 wt% or 2 wt% or 3 wt% or 4 wt% or 5 wt% or 10 wt% or 15 wt% or 20 wt% or 25 wt% to about 30 wt% or 40 wt%. Ranges from any lower limit to any higher limit just disclosed are contemplated.

Mixed feedstocks of two LOA's are also contemplated by the present invention. Such two component feedstocks may be blends of 1-hexene and 1-decene, 1-hexene and 1-dodecene, 1-decene and 1-dodecene, 1-decene and 1-tetradecene, or 1-dodecene and 1-tetradecene. For such two α-olefin mixed feedstocks, either component may be present in amounts of 1-99 wt%, with preferred ranges for both components being in the ranges of 10 to 90 wt%, 15 to 85 wt%, 20 to 80 wt%, or 30 to 70 wt%.

In other embodiments the olefin feed consists essentially of a single α-olefin such as 1-decene or 1-dodecene.

Particularly advantaged feedstocks include alpha-olefins derived from an ethylene growth process, from Fischer-Tropsch synthesis, from steam or thermal cracking processes, syn-gas synthesis, C4 stream containing 1-butene from refinery operation, such as Raff-1 or Raff-2 stream, and so forth. The α-olefin made from ethylene growth processes contains only even-number olefins. α-olefin containing both even- and odd-number olefins can also be made from steam cracking or thermal cracking of wax, such as petroleum wax, Fischer-Tropsch wax, or any other readily available hydrocarbon wax. α-olefin can also be made in a Fischer-Tropsch synthesis process. α-olefin made directly from syngas synthesis processes, which can produce significant amounts of C₃-C₁₅ alpha-olefins, containing both even- and odd-number olefins.

In an embodiment, it is advantageous to use a high quality feed with minimal inert material. However, α-olefin containing other inert components, including saturated hydrocarbons, internal or vinylidene olefins or aromatic diluents can also be used as feed. In this case, the α-olefin would be reacted to give polymer and inert components will be passed through the reactor unaffected. The polymerization process is also a separation process.

In an embodiment, the olefins used in the feed are co-fed into the reactor. In another embodiment, the olefins are fed separately into the reactor. In either case, the catalyst/promoters may also be feed separately or together, with respect to each other and with respect to the α-olefin species.

### Catalyst System

To chemically obtain a PAO that has a high molecular weight portion in the above desired amounts, the catalyst system comprises a metallocene compound (Formula 1, below) together with an activator, optionally a co-activator, and optionally a scavenger.

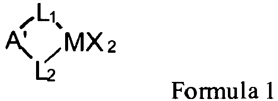

The term "catalyst system" is defined herein to mean a catalyst precursor/activator pair, such as a metallocene/activator pair. When "catalyst system" is used to describe such a pair before activation, it means the unactivated catalyst (precatalyst) together with an activator and, optionally, a co-activator (such as a trialkyl aluminum compound). When it is used to describe such a pair after activation, it means the activated catalyst and the activator or other charge-balancing moiety. Furthermore, this activated "catalyst system" may optionally comprise the co-activator and/or other charge-balancing moiety.

### Metallocene Catalysts

The metallocene is selected from one or more compounds according to Formula 1, above. In Formula 1, M is selected from Group 4 transition metals, preferably zirconium (Zr), hafnium (Hf) and titanium (Ti), L1 and L2 are independently selected from cyclopentadienyl ("Cp"), indenyl, and fluorenyl, which may be substituted or unsubstituted, and which may be partially hydrogenated, A is an optional bridging group which if present, in preferred embodiments is selected from dialkylsilyl, dialkylmethyl, ethenyl (-CH₂-CH₂-), alkylethenyl (-CR₂-CR₂-), where alkyl can be independently hydrogen radical, C₁ to C₁₆ alkyl radical or phenyl, tolyl, xylyl radical and the like, and wherein each of the two X groups, X^{a} and X^{b}, are independently selected from halides, OR (R is an alkyl group, preferably selected from C₁ to C₅ straight or branched chain alkyl groups), hydrogen, C₁ to C₁₆ alkyl or aryl groups, haloalkyl, and the like. Usually relatively more highly substituted metallocenes give higher catalyst productivity and wider product viscosity ranges and are thus often more preferred.

In using the terms "substituted or unsubstituted cyclopentadienyl ligand", "substituted or unsubstituted indenyl ligand", and "substituted or unsubstituted tetrahydroindenyl ligand", "substituted or unsubstituted fluorenyl ligand", and "substituted or unsubstituted tetrahydrofluorenyl or octahydrofluorenyl ligand" the substitution to the aforementioned ligand may be hydrocarbyl, substituted hydrocarbyl, halocarbyl, substituted halocarbyl, silylcarbyl, or germylcarbyl. The substitution may also be within the ring giving heterocyclopentadienyl ligands, heteroindenyl ligands or heterotetrahydoindenyl ligands, each of which can additional be substituted or unsubstituted.

For purposes of this invention and the claims thereto the terms "hydrocarbyl radical," "hydrocarbyl" and hydrocarbyl group" are used interchangeably throughout this document. Likewise the terms "group", "radical", and "substituent" are also used interchangeably in this document. For purposes of this disclosure, "hydrocarbyl radical" is defined to be C₁-C₁₀₀ radicals, that may be linear, branched, or cyclic, and when cyclic, aromatic or non-aromatic, and include substituted hydrocarbyl radicals, halocarbyl radicals, and substituted halocarbyl radicals, silylcarbyl radicals, and germylcarbyl radicals as these terms are defined below. Substituted hydrocarbyl radicals are radicals in which at least one hydrogen atom has been substituted with at least one functional group.

Halocarbyl radicals are radicals in which one or more hydrocarbyl hydrogen atoms have been substituted with at least one halogen (e.g., F, Cl, Br, I) or halogen-containing group (e.g., CF₃). Substituted halocarbyl radicals are radicals in which at least one halocarbyl hydrogen or halogen atom has been substituted with at least one functional group

Silylcarbyl radicals (also called silylcarbyls) are groups in which the silyl functionality is bonded directly to the indicated atom or atoms. Germylcarbyl radicals (also called germylcarbyls) are groups in which the germyl functionality is bonded directly to the indicated atom or atoms. Polar radicals or polar groups are groups in which the heteroatom functionality is bonded directly to the indicated atom or atoms. They include heteroatoms of groups 1-17 of the Periodic Table either alone or connected to other elements by covalent or other interactions such as ionic, van der Waals forces, or hydrogen bonding.

### Activators / Co-activators

Activators that may be used include aluminoxanes such as methyl aluminoxane, modified methyl aluminoxane, ethyl aluminoxane, *iso*-butyl aluminoxane and the like, or non-coordinating anions (NCAs) such as Lewis acid activators including triphenyl boron, tris-perfluorophenyl boron, tris-perfluorophenyl aluminum and the like, or ionic activators including dimethylanilinium tetrakis perfluorophenyl borate, triphenyl carbonium tetrakis perfluorophenyl borate, dimethylanilinium tetrakis perfluorophenyl aluminate, and the like.

For purposes of this invention and the claims thereto noncoordinating anion (NCA) is defined to mean an anion which either does not coordinate to the catalyst metal cation or that coordinates only weakly to the metal cation. An NCA coordinates weakly enough that a neutral Lewis base, such as an olefinically or acetylenically unsaturated monomer, can displace it from the catalyst center. Any metal or metalloid that can form a compatible, weakly coordinating complex with the catalyst metal cation may be used or contained in the noncoordinating anion. Suitable metals include, but are not limited to, aluminum, gold, and platinum. Suitable metalloids include, but are not limited to, boron, aluminum, phosphorus, and silicon. A subclass of non-coordinating anions comprises stoichiometric activators, which can be either neutral or ionic. The terms ionic activator, and stoichiometric ionic activator can be used interchangeably. Likewise, the terms neutral stoichiometric activator and Lewis acid activator can be used interchangeably.

A co-activator is a compound capable of alkylating the transition metal complex, such that when used in combination with an activator, an active catalyst is formed. Co-activators include aluminoxanes such as methyl aluminoxane, modified aluminoxanes such as modified methyl aluminoxane, and trialkyl aluminums such as trimethyl aluminum, triisobutyl aluminum, triethyl aluminum, and tri-isopropyl aluminum, tri-n-hexyl aluminum, tri-n-octyl aluminum, tri-n-decyl aluminum or tri-n-dodecyl aluminum. Co-activators are typically used in combination with Lewis acid activators and ionic activators when the precatalyst is not a dihydrocarbyl or dihydride complex. Sometimes co-activators are also used as scavengers to deactivate impurities in feed or reactors.

Other components used in the reactor system can include inert solvent, catalyst diluent, etc. These components can also be recycled during the operation

### Lube Product Isolation

When the polymerization or oligomerization reaction is progressed to the predetermined stage, such as 70% or 80% or 90% or 95% alpha-olefin conversion, the reactor effluent is withdrawn from the reactor. The catalyst is usually deactivated by introduction of air, CO₂ or water or other deactivator to a separate reaction vessel. The catalyst components may be removed by conventional methods, including washing with aqueous base or acid followed by separating the organic layer as in conventional catalyst separation method. After the catalyst removal, the effluent can be subjected to a distillation to separate the un-reacted feed olefins, inert solvents and other lighter components from the heavier oligomerization product. Depending on the polymerization reaction conditions, this oligomerization product may have high degree of unsaturation as measured by bromine number (ASTM D1159 method or equivalent method). If the bromine number is judged too high, the heavy oligomer fraction is subjected to a hydrofinishing step to reduce the bromine number, usually to less than 3 or less than 2 or less than 1, depending on hydrofinishing conditions and the desired application of the PAO base stock. Typical hydrogenation step can be found in many published patents and literatures of PAO production process. Sometimes, when the PAO products have very high molecular weight or hydrogen is used during the polymerization step, the isolated PAO products will naturally have very low brominue number or degree of unsaturation, the product can be used directly in many applications without a separate hydrogenation step.

The light fraction, as separated directly from the reactor effluent or further fractionated from the light fraction contains un-converted alpha-olefins. This light fraction can be recycled with or without any purge, into the polymerization reactor for further conversion into lube product. Or, this fraction as is, or the appropriated fractions, can be recycled into the polymerization reactor, after passing through a feed pre-treatment column containing the typical polar component removing agent, such as activated alumina, molecular sieve, or other active sorbents. This pre-treatment column can remove any of the impurity from the catalyst residual or other impurities. Alternatively, this fraction can be combined with fresh feed olefins before feed purification column.

### Recycled feed olefin stream

The amount of the fraction containing the un-reacted olefins from the reactor effluent ranges from 1% to 70% of the fresh feed olefins, depending on the conversion, the amount of inert components and solvents used in the reaction. Usually this amount ranges from 5% to 50% and, more commonly, from 5% to 40% of the fresh feed olefin. This fraction containing the un-reacted olefins can optionally be recycled into the polymerization reactor in 100% or sometimes only part of the fraction, ranging from 99% to 20%, alternatively 95% to 40%, or alternatively 90% to 50%, is re-cycled into the polymerization reactor. The amount of this fraction to be recycled depends on the composition of the fraction and how much inert components or solvents the polymerization reactor can tolerate. Usually, the higher the amount of recycle, the better the total lube yields and better alpha-olefin usage and better process economics.

The fraction containing the un-reacted olefins from the reactor effluent can be recycled into the polymerization reactor by itself; or, more commonly, the un-reacted olefins fraction is co-fed into the polymerization reactor with some fresh alpha-olefins. The weight% of the recycled un-reacted olefin fractions in the total feed ranges from 0% to 100%. More commonly, the weight% of ranges from 0.1% to 70%, or alternatively 0.5% to 50% or alternatively, 1% to 30%. Or during a continuous operation, this weight% can change depending on selected degree of conversion, product viscosity, degree of purge stream, etc. Sometimes when making high viscosity product, higher percentage of the recycled stream is used to reduce reactor viscosity and enhance reactor control.

The fraction containing the un-reacted olefins usually contains the feed alpha-olefins, internal olefins or di- or tri-substituted olefins, small oligomers of the starting alpha-olefins and other inert components, such as solvents and diluents, etc. In this recycled stream, the amount of internal olefins, di-, tri-susbstituted olefins, solvents and diluents are usually in higher concentration than the fresh feed olefins. In other words, the amount of reactive alpha-olefins is usually lower than the fresh feed olefins. The amount of alpha-olefins can range from 2% to 80% and usually is not more than 70%.

### Mechanical Preparation

If the PAO has not been formulated in a lubricant, mechanical breakdown of the PAO to pre-shear the PAO is a viable option. The concerns of creating undesirable metals or other compounds in the lubricant are eliminated; only the PAO is sheared. This mechanical breakdown can be achieved by simply subjecting the PAO to the shearing forces similar to those employed in the taper roller bearing test. Alternatively, this could be accomplished by feeding the PAO thru a set of rollers, with possible gravity flow through a tower equipped with a series of grinding rollers thru which the PAO flows wherein the exiting PAO has a smaller high end tail than the initial PAO. For higher viscosity PAOs, such as KV(100) of 1,000 or greater, while the mechanical shearing of the high end tail results in some initial viscosity loss, the resulting KV(100) will be within the specifications and the desired film thickness characteristics of the PAO is also maintained.

The PAOs being subjected to the mechanical elimination of the high MW portions of the polymer may be those produced by the above described metallocene catalyst or by conventional PAO catalyst systems. One such catalyst system includes Friedel-Crafts catalysts, including, for example AlCl₃, BF₃, or complexes of the oligomerization or polymerization catalysts generated by a combination of the oligomerization or polymerization catalyst with at least one cocatalyst. When using only a single cocatalyst, the cocatalyst is water, an alcohol, a carboxylic acid, or an alkyl acetate. Suitable alcohols include C₁-C₁₀ alcohols, preferably C₁-C₆ alcohols, and include methanol, ethanol, n-propanol, n-butanol, n-pentanol, and n-hexanol. Suitable acetates include C₁-C₁₀ alkyl acetates, preferably C₁-C₆ alkyl acetates including methyl acetate, ethyl acetate, n-propyl acetate, n-butyl acetate, and the like. Combinations of cocatalysts have also been determined to produce oligomers having desired physical properties and product distributions. The combination of cocatalysts includes one alcohol and at least one alkyl acetate. The cocatalyst(s) complexes with the principal catalyst to form a coordination compound which is catalytically active. The cocatalyst is used in an amount of from about 0.01 to about 10 weight percent, based on the weight of the alpha-olefin feed, most preferably about 0.1 to 6 weight percent.

Alternatively, if the goal is a high viscosity index (HVI) PAO, the catalyst used may be a supported, reduced metal oxide catalyst, such as Cr compounds on silica or other supported IUPAC Periodic Table Group VIB compounds. The catalyst most preferred is a lower valence Group VIB metal oxide on an inert support. Preferred supports include silica, alumina, titania, silica alumina, magnesia and the like. Alternatively, the oligomerization or polymerization reaction of the nonene containing feedstock may also be carried out in the presence of a catalyst comprising an acidic ionic liquid. Most of the ionic liquids are salts (100% ions) with a melting point below 100° C; they typically exhibit no measurable vapor pressure below thermal decomposition.

### Experimental

The invention may be better understood, and additional benefits to be obtained thereby realized, by reference to the following examples. These examples should be taken only as illustrative of the invention rather than limiting, and one of ordinary skill in the art in possession of the present disclosure would understand that numerous other applications are possible other than those specifically enumerated herein.

The taper roller bearing tests were done using CEC L-45-A-99 procedure at 20 hours. During this test, the oil is tested in a tapered roller bearing fitted into a Four-Ball EP test machine. The taper roller bearing, submerged in 40 ml of test fluid, was rotated at 1475 rpm with a load of 5000 Newton at 60°C for a standard duration of 20 hours. RL-209, RL-210 and RL-181 reference oils were used in the test. Prior to the test, the sample viscosity is measured. When the test is completed, the used fluid viscosity is measured and % viscosity loss was calculated from the sample viscosity by determining the difference between the initial viscosity and the used fluid viscosity. The severity of the test can be increased by extending the test duration up to 100 or 200 hours.

Molecular weight distribution (MWD), defined as the ratio of weight-averaged MW to number-averaged MW (= Mw/Mn), can determined by gel permeation chromatography (GPC) using polystyrene standards, as described in p. 115 to 144, Chapter 6, The Molecular Weight of Polymers in "Principles of Polymer Systems" (by Ferdinand Rodrigues, McGraw-Hill Book, 1970). The GPC solvent was HPLC Grade tetrahydrofuran, uninhibited, with a column temperature of 30° C, a flow rate of 1 ml/min, and a sample concentration of 1 wt%, and the Column Set is a Phenogel 500 A, Linear, 10E6A.

Kinematic Viscosity (KV) was measured according to ASTM D445 at the temperature indicated (e.g., 100° C or 40° C).

### Examples

Samples of polyalphaolefins were prepared as discussed below. The kinematic viscosity at 100° C, as well as the mass fractions at defined molecular weights, were determined for the samples. Each sample was subject to the above described taper roller test; the kinematic viscosity and viscosity loss for each sample was determined afterwards. Prior to the taper roller bearing test, the mass fraction at various molecular weights for each sample, via GPC, was also determined for each sample. For Samples A to C, the mass fraction of the polymer for portions of polymer having a molecular weight greater than 60,000 was also determined. For Samples A to J, the mass fraction of the polymer for portions of polymer having a molecular weight greater than 45,000 was also determined. The data is set forth in Table 1 below.

Sample A is a commercial PAO, produced by using α-olefin feedstocks, with an aluminum chloride catalyst. The PAO is available as SpectraSyn^{™} 100 from ExxonMobil Chemical Company, Houston, TX, USA.

Sample B is a commercial PAO, produced by using α-olefin feedstocks and a chromium on silica support. The PAO is available as SpectraSyn^{™} Ultra 150 from ExxonMobil Chemical Company, Houston, TX, USA.

Sample C was prepared under continuous steady state operations using a CSTR reactor. The catalayst used was dimethylsilylbis (tetrahydroindenyl) zirconium dichloride. N,N-dimethylanilinium tetra(pentafluorophenyl)borate was used as an activator, along with the co-activator tri-normal octyl aluminium. The feed stream was an α-olefin mixture of C₆, C₁₀, and C₁₄ with a weight ratio of 25:60:15. The typical concentration of the catalyst was 10 ppm, the activator concentration was 19 ppm, and the co-activator concentration was 80 ppm. The molar ratio of the three catalyst components metallocene/activator/co-activator was 1: 1: 10.

Samples D to G were prepared under batch conditions wherein the catalyst, activator, co-activator, and feedstock were all introduced into a batch tank reactor with stirring capabilities. The system had an initial temperature of 40° C and was operated until a steady temperature of was reached - for Samples D and E, this was 105° C; for Sample F, this was 90° C; and for Samples G to J, this was 80° C. The tank was stirred for 16 hours and then the reaction was terminated and the PAO recovered. The catalayst used was diphenylmethylindene(cyclopentadienyl)(9-fluorenyl)zirconium dichloride. N,N-dimethylanilinium tetra(pentafluorophenyl)borate was used as an activator, along with the co-activator tri-normal octyl aluminium. The α-olefin feedstock was C₁₀.

Samples H to J were prepared similar to Samples D to G in a batch method. The feedstock was a α-olefin mixture of C₆, C₁₀, and C₁₄ with a weight ratio of 15:60:25.

**Table 1**

| **PAO** | **before shear** | **after shear** | **% polymer > 60,000** | | | **% polymer > 45,000** | | |
|---|---|---|---|---|---|---|---|---|
| **Sample** | **KV100° C, cSt** | **% Vis Loss** | **before shear** | **after shear** | **net loss** | **before shear** | **after shear** | **net loss** |
| A | 105 | 0.1 | 0.00 | 0.00 | 0.00 | 0.09 | 0.12 | -0.03 |
| B | 147 | 9.0 | 0.72 | 0.13 | 0.59 | 1.56 | 0.83 | 0.73 |
| C | 147 | 0.4 | 0.00 | 0.00 | 0.00 | 0.00 | 0.00 | 0.00 |
| D | 373 | 2.08 | 0.2 | -- | -- | 0.9 | 0.7 | 0.2 |
| E | 405 | 2.92 | 0.4 | -- | -- | 1.5 | 0.7 | 0.8 |
| F | 589 | 3.75 | 2.7 | -- | -- | 6.8 | 4.0 | 2.8 |
| G | 917 | 8.64 | 4.5 | -- | -- | 10.0 | 5.4 | 4.6 |
| H | 847 | 10.64 | 6.5 | -- | -- | 13.3 | 9.8 | 3.5 |
| I | 742 | 11.44 | 4.7 | -- | -- | 10.3 | 6.4 | 3.9 |
| J | 651 | 11.47 | 3.7 | -- | -- | 9.0 | 4.5 | 4.5 |

As evidenced by the data above, at the lower kinematic viscosity of 100 cSt, Sample A, the PAO polymer is absent of any high molecular weight component. Subjecting the polymer to the 20 hour taper roller bearing test results in an insignificant drop in the kinematic viscosity. Thus, when used as a lubricant, the PAO is expected to maintain the desired film thickness and lubricating advantages.

Sample B, having a higher viscosity than Sample A and manufactured using a non-metallocene catalyst, has a small amount of high molecular weight components, but has a high viscosity loss following the taper roller bearing test.

Sample C, manufactured via a single-site metallocene catalyst, is absent of any high molecular weight component. Subjecting the sample to the taper roller bearing test, the PAO had only a 0.4% loss in kinematic viscosity.

Samples D and E both have a high molecular weight portion of less than 1%. The viscosity loss is less than 5%. In comparison to a non-metallocene catalyst produced PAO, such as Sample B, the viscosity loss is significantly less for Sample D.

The above data also shows that it is not just reduction of the very high end molecular weight component that reduces viscosity loss due to shear, but reduction, or elimination, of the portion of the molecule having a MW of greater than 45,000 is also important. Examples I and J show very high viscosity losses, but the majority of the high MW portion is between 60,000 and 45,000.

Example G was also tested, via an X-ray photoelectron microscopy (XPS) to determine the binding energy of the composition. In the sheared PAO, an oxygen signal is received, which was not present in the pre-sheared PAO. This provides a correlation to the amount of shearing of the carbon-carbon bonds. This breaking of the carbon-carbon bonds creates a carbonyl.

The distribution of oxygen and carbon in the sheared and unsheared Example J using X-ray photoelectron spectroscopy (XPS). FIG. 1 (right) shows the XPS plot of photoemission intensity versus binding energy for the PAO and FIG. 1 (left) shows the plot of the Example after shear. In the left sheared sample, the carbon peak is seen similar to PAO along with a new small peak due to oxygen. Quantitative analysis of the amount of oxygen relative to carbon shows 0.46 oxygen molecules per 100 carbon molecules. This result suggests that in the sheared PAO, upon shearing of the carbon-carbon bonds, there may creation of carbonyls via incorporation of oxygen into hydrocarbon fluid. The lower the amount of oxygen molecules per carbon molecules determined via XPS, the lower the amount of shearing to which the PAO has been subjected.

The PAO has an oxygen content of not more than 0.5 oxygen molecules per 100 carbon molecules in the sheared sample. This characteristic is mostly applicable to those PAOs wherein the shear stability of the polymer is obtained during the oligomerization or polymerization of the polymer. For those shear stable PAOs obtained by mechanical shearing, an oxygen molecule content of greater than 0.5 to 100 carbon molecules would not be unexpected.

Samples A to C were subjected to further taper roller bearing testing, wherein the test time was extended to 100 hours. The kinematic viscosity loss and high molecular weight polymer breakdown data is set forth in Table 2 below.

**Table 2**

| **PAO** | **before shear** | **after shear** | **% polymer > 60,000** | | | **% polymer > 45,000** | | |
|---|---|---|---|---|---|---|---|---|
| **Sample** | **KV100° C, cSt** | **% Vis Loss** | **before shear** | **after shear** | **Net loss** | **Before shear** | **after shear** | **Net loss** |
| A | 105 | 0.5 | 0.00 | 0.00 | 0.00 | 0.09 | 0.12 | -0.01 |
| B | 147 | 11.0 | 0.72 | 0.03 | 0.69 | 1.56 | 0.42 | 1.14 |
| C | 147 | 0.4 | 0.00 | 0.00 | 0.00 | 0.00 | 0.10 | 0.00 |

In comparing the taper roller bearing test for 20 hours to the taper roller bearing test for 100 hours, only Sample C experienced no further loss of kinematic viscosity. The viscosity loss value obtained for Sample A is within the precision parameters of the test; and the increased testing for Sample A is considered to show no viscosity loss. For Sample B, the viscosity loss is increased, as is the breakdown of the higher MW portion of the sample.

### Applications

The lubricating oils or grease of the present invention are particularly preferred to be used for the lubrication of rolling element bearings (e.g., ball bearings), gears, circulation lubrication system, hydraulics, compressors used to compress gas (such as reciprocating, rotary and turbo-type air compressors, gas turbine or other process gas compressors) or to compress liquids (such as refrigerator compressors), vacuum pump or metal working machinery, as well as electrical applications, such as for lubrication of electrical switch that produces an electrical arc during on-off cycling or for electrical connectors.

The lubricant or grease components disclosed in this invention are most suitable for applications in industrial machinery where one of more the following characteristics are desirable: wide temperature range, stable and reliable operation, superior protection, extended operation period, energy efficient. The present oils are characterized by an excellent balance of performance properties including superior high and low temperature viscosities, flowability, excellent foam property, shear stability, and improved anti-wear characteristics, thermal and oxidative stability, low friction, low traction. They may find utility as gear oils, bearing oil, circulating oils, compressor oils, hydraulic oils, turbine oils, grease for all kinds of machinery, as well as in other applications, for example, in wet clutch systems, blower bearings, wind turbine gear box, coal pulverizer drives, cooling tower gearboxes, kiln drives, paper machine drives and rotary screw compressors.

The present disclosure thus provided for the following embodiments:
A. A polyalphaolefin polymer, wherein the polyalphaolefin polymer has a kinematic viscosity at 100° C of 135 cSt or greater, wherein the polyalphaolefin polymer is characterized by, after being subjected to twenty hours of taper roller bearing testing, the polymer has a kinematic viscosity loss of less than 9 %.
B. A polyalphaolefin polymer, wherein the polyalphaolefin polymer has a kinematic viscosity at 100° C of 135 cSt or greater, wherein the polyalphaolefin polymer is characterized by not more than 0.5 wt% of the polymer having an molecular weight of greater than 60,000 Daltons.
C. The polyalphaolefin polymer of either embodiment A or B or a combination of embodiments A and B, wherein the polyalphaolefin has a kinematic viscosity at 100° C of 135 to 950 cSt or 135 to 600 cSt, or 135 to 500 cSt, or 135 to 400 cSt, or 135 to 300 cSt.
D. The polyalphaolefin polymer of any one or any combination of embodiment A to C, wherein the polyalphaolefin, after a twenty hour taper roller bearing testing, has a kinematic viscosity loss of not more than 5%, or not more than 1%, or not more than 0.5%, or not more than 0.01%, or zero percent.
E. The polyalphaolefin polymer of any one or any combination of embodiments A to D, wherein the polymer is characterized by not more than 0.2 wt% of the polymer having a molecular weight of greater than 60,000 Daltons.
F. The polyalphaolefin polymer of any one or any combination of embodiments A to E, wherein the polymer is characterized by not more than 0.1 wt% of the polymer having a molecular weight of greater than 60,000 Daltons.
G. The polyalphaolefin polymer of any one or any combination of embodiments A to F, wherein the polymer is characterized by being substantially absent of any high end tail of the molecular weight distribution having a molecular weight of greater than 60,000 Daltons.
H. The polyalphaolefin polymer of any one or any combination of embodiments A to G, wherein, the polyalphaolefin is characterized by not more than 1.5 wt% of the polymer having a molecular weight of greater than 45,000 Daltons.
I. The polyalphaolefin polymer of any one or any combination of embodiments A to H, wherein the polymer is characterized by not more than 1.0 wt% of the polymer having a molecular weight of greater than 45,000 Daltons.
J. The polyalphaolefin polymer of any one or any combination of embodiments A to I, wherein the polymer is characterized by not more than 0.50 wt% of the polymer having a molecular weight of greater than 45,000 Daltons.
K. The polyalphaolefin polymer of any one or any combination of embodiments A to J, wherein the polymer is characterized by not more than 0.10 wt% of the polymer having a molecular weight of greater than 45,000 Daltons.
L. The polyalphaolefin polymer of any one or any combination of embodiments A to K, wherein the polymer is characterized by not more than 0.01 wt% of the polymer having a molecular weight of greater than 45,000 Daltons.
M. The polyalphaolefin polymer of any one or any combination of embodiments A to L, wherein the polymer is produced by contacting a catalyst system comprising a metallocene, a non-coordinating anion activator, and an optional co-activator with a feedstock comprising at least one olefin, the at least one olefin selected from at least one linear alpha-olefins having a carbon number of 5 to 18 (C5 to C18).
N. The polyalphaolefin polymer of any one or any combination of embodiments A to M, wherein the polymer has been subjected to mechanical breakdown to reduced any portions of the polymer having a molecular weight greater than 45,000 Daltons.
O. The polyalphaolefin polymer of any one or any combination of embodiments A to N, wherein the polyalphaolefin polymer is characterized by, after being subjected to twenty hours of taper roller bearing testing, an oxygen content of not more than 0.5 oxygen molecules per 100 carbon molecules.
P. The polyalphaolefin polymer of any one or any combination of embodiments A to O wherein the polyalphaolefin polymer is derived from a feedstock containing not more than 10 mol% ethylene.
Q. The poly alphaolefin polymer of any one or any combination of embodiments A to P wherein the polyalphaolefin polymer is derived from a feedstock containing at least one C₅ to C₂₄ alphaolefin.
R. The poly alphaolefin polymer of any one or any combination of embodiments A to P wherein the polyalphaolefin polymer is derived from a feedstock containing any possible combination of 1-hexene, 1-decene, 1-dodecene, and 1-tetradecene.
S. The polyalphaolefin polymer of any one or any combination of all of the above embodiments A to R, wherein the polyalphaolefin is blended into a gear oil, bearing oil, circulating oil, compressor oil, hydraulic oil, turbine oil, or machinery grease.
T. The polyalphaolefin of any one or any combination of all of the above embodiments A to S, wherein the polyalphaolefin is blended into a lubricant useful in a wet gearbox, clutch system, blower bearing, wind turbine gear box, coal pulverizer drive, cooling tower gear box, kiln drive, paper machine drive, or rotary screw compressor.

Unless stated otherwise herein, the meanings of terms used herein shall take their ordinary meaning in the art; and reference shall be taken, in particular, to Synthetic Lubricants and High-Performance Functional Fluids, Second Edition, Edited by Leslie R. Rudnick and Ronald L. Shubkin, Marcel Dekker (1999). This reference, as well as all patents and patent applications, test procedures (such as ASTM methods and the like), and other documents cited herein are fully incorporated by reference to the extent such disclosure is not inconsistent with this invention and for all jurisdictions in which such incorporation is permitted. Note that Trade Names used herein are indicated by a ^{™} symbol or ® symbol, indicating that the names may be protected by certain trademark rights, e.g., they may be registered trademarks in various jurisdictions. Note also that when numerical lower limits and numerical upper limits are listed herein, ranges from any lower limit to any upper limit are contemplated.

## Claims

1. A polyalphaolefin polymer, wherein the polyalphaolefin polymer has a kinematic viscosity at 100° C of 135 cSt or greater and is derived from not more than 10 mol% ethylene, wherein the polyalphaolefin polymer is **characterized by** not more than 1.5 wt% of the polymer having a molecular weight of greater than 45,000 Daltons and not more than 0.5 wt% of the polymer having a molecular weight greater than 60,000 Daltons, and by, after being subjected to twenty hours of a taper roller bearing testing, having a kinematic viscosity loss of less than 9%.

2. The polyalphaolefin polymer of claim 1, wherein the polyalphaolefin has a kinematic viscosity at 100° C of 135 to 950 cSt.

3. The polyalphaolefin polymer of claim 1 or claim 2, wherein the polymer, after being subject to a taper roller bearing testing, has a kinematic viscosity loss of not more than 5%.

4. The polyalphaolefin polymer of any one of claims 1 to 3, wherein the polymer is **characterized by** not more than 0.2 wt% of the polymer having a molecular weight of greater than 60,000 Daltons.

5. The polyalphaolefin polymer of any one of claims 1 to 4, wherein the polymer is produced by contacting a catalyst system comprising a metallocene, a non-coordinating anion activator, and an optional co-activator with a feedstock comprising at least one olefin, the at least one olefin selected from at least one alpha-olefin having a carbon number of 5 to 18 (C5 to C18).

6. The polyalphaolefin polymer of any one of claims 1 to 5, wherein the polymer has been subjected to mechanical breakdown to reduce any portions of the polymer having a molecular weight greater than 45,000 Daltons.

7. The polyalphaolefin polymer of any of claims 1 to 6, wherein the polyalphaolefin polymer is **characterized by**, after being subjected to twenty hours of taper roller bearing testing, an oxygen content of not more than 0.5 oxygen molecules per 100 carbon molecules.

8. The polyalphaolefin polymer of any one of claims 1 to 7, wherein the polyalphaolefin polymer is derived from a feedstock containing at least one C5 to C24 alphaolefin.

9. The polyalphaolefin polymer of any one of claims 1 to 8, wherein the polyalphaolefin is blended into a gear oil, bearing oil, circulating oil, compressor oil, hydraulic oil, turbine oil, or machinery grease.

10. The polyalphaolefin polymer of any one of claims 1 to 9, wherein the polyalphaolefin is blended into a lubricant useful in a wet gearbox, clutch system, blower bearing, wind turbine gear box, coal pulverizer drive, cooling tower gear box, kiln drive, paper machine drive, or rotary screw compressor.

## Patentansprüche

1. Polyalphaolefin-Polymer, wobei das Polyalphaolefin-Polymer eine kinematische Viskosität bei 100°C von 135 cSt oder mehr aufweist und von nicht mehr als 10 mol-% Ethylen abgeleitet ist, wobei das Polyalphaolefin-Polymer **dadurch gekennzeichnet ist, dass** nicht mehr als 1,5 Gew.-% des Polymers ein Molekulargewicht von mehr als 45.000 Dalton aufweisen und nicht mehr als 0,5 Gew.-% des Polymers ein Molekulargewicht von mehr als 60.000 Dalton aufweisen, und dadurch, dass es einen kinematischen Viskositätsverlust von weniger als 9 % aufweist, nachdem es 20 Stunden einem Kegelrollenlagertest unterzogen worden ist.

2. Polyalphaolefin-Polymer nach Anspruch 1, wobei das Polyalphaolefin eine kinemtaische Viskosität bei 100°C von 135 bis 950 cSt aufweist.

3. Polyalphaolefin-Polymer nach Anspruch 1 oder Anspruch 2, wobei das Polymer einen kinematischen Viskositätsverlust von nicht mehr als 5 % aufweist, nachdem es einem Kegelrollenlagertest unterzogen worden ist.

4. Polyalphaolefin-Polymer nach einem der Ansprüche 1 bis 3, wobei das Polymer **dadurch gekennzeichnet ist, dass** nicht mehr als 0,2 Gew.-% des Polymers ein Molekulargewicht von mehr als 60.000 Dalton aufweisen.

5. Polyalphaolefin-Polymer nach einem der Ansprüche 1 bis 4, wobei das Polymer erzeugt ist, indem ein Katalysatorsystem, das ein Metallocen, einen nichtkoordinierenden Anionaktivator und ggf. einen Coaktivator umfasst, mit einem Einsatzmaterial in Kontakt gebracht wird, welches mindestens ein Olefin umfasst, wobei das mindestens eine Olefin ausgewählt ist aus mindestens einem Alphaolefin mit einer Kohlenstoffanzahl von 5 bis 18 (C5 bis C18).

6. Polyalphaolefin-Polymer nach einem der Ansprüche 1 bis 5, wobei das Polymer einer mechanischen Spaltung unterworfen worden ist, um Anteile des Polymers mit einem Molekulargewicht von mehr als 45.000 Dalton zu verringern.

7. Polyalphaolefin-Polymer nach einem der Ansprüche 1 bis 6, wobei das Polyalphaolefin-Polymer durch einen Sauerstoffgehalt von nicht mehr als 0,5 Sauerstoffmolekülen pro 100 Kohlenstoffmolekülen gekennzeichnet ist, nachdem es 20 Stunden einem Kegelrollenlagertest unterzogen worden ist.

8. Polyalphaolefin-Polymer nach einem der Ansprüche 1 bis 7, wobei das Polyalphaolefin-Polymer von einem Einsatzmaterial abgeleitet ist, das mindestens ein C5- bis C24-Alphaolefin enthält.

9. Polyalphaolefin-Polymer nach einem der Ansprüche 1 bis 8, wobei das Polyalphaolefin zu einem Getriebeöl, Lageröl, Umlauföl, Kompressoröl, hydraulischen Öl, Turbinenöl oder Maschinenfett gemischt wird.

10. Polyalphaolefin-Polymer nach einem der Ansprüche 1 bis 9, wobei das Polyalphaolefin zu einem Schmiermittel gemischt wird, das in einem Nassgetriebegehäuse, Kupplungssystem, Gebläselager, Windturbinengetriebegehäuse, Kohlemühlenantrieb, Kühlturmgetriebegehäuse, Ofenantrieb, Papiermaschinenantrieb oder Schraubenverdichter nützlich ist.

## Revendications

1. Polymère poly(alpha-oléfine), le polymère poly(alpha-oléfine) ayant une viscosité cinématique à 100 °C supérieure ou égale à 135 cSt et étant issue de pas plus de 10 % en mole d'éthylène, le polymère poly(alpha-oléfine) étant **caractérisé en ce que** pas plus de 1,5 % en poids du polymère n'a une masse moléculaire supérieure à 45 000 Daltons et pas plus de 0,5 % en poids du polymère n'a une masse moléculaire supérieure à 60 000 Daltons et **en ce que**, après avoir été soumis à vingt heures d'un essai sur roulement à rouleaux coniques, il a une perte de viscosité cinématique inférieure à 9 %.

2. Polymère poly(alpha-oléfine) selon la revendication 1, la poly(alpha-oléfine) ayant une viscosité cinématique à 100 °C de 135 à 950 cSt.

3. Polymère poly(alpha-oléfine) selon la revendication 1 ou la revendication 2, le polymère, après avoir été soumis à un essai sur roulement à rouleaux coniques, ayant une perte de viscosité cinématique de pas plus de 5 %.

4. Polymère poly(alpha-oléfine) selon l'une quelconque des revendications 1 à 3, le polymère étant **caractérisé en ce que** pas plus de 0,2 % en poids du polymère n'a une masse moléculaire supérieure à 60 000 Daltons.

5. Polymère poly(alpha-oléfine) selon l'une quelconque des revendications 1 à 4, le polymère étant produit par la mise en contact d'un système catalyseur comprenant un métallocène, un activateur anionique non coordinant et un co-activateur facultatif avec une charge de départ comprenant au moins une oléfine, l'au moins une oléfine étant choisie parmi au moins une alpha-oléfine ayant un nombre d'atomes de carbone de 5 à 18 (en C5 à C18).

6. Polymère poly(alpha-oléfine) selon l'une quelconque des revendications 1 à 5, le polymère ayant été soumis à une fragmentation mécanique pour réduire toutes portions du polymère ayant une masse moléculaire supérieure à 45 000 Daltons.

7. Polymère poly(alpha-oléfine) selon l'une quelconque des revendications 1 à 6, le polymère poly(alpha-oléfine) étant caractérisé, après avoir été soumis à vingt heures d'essai sur roulement à rouleaux coniques, par une teneur en oxygène de pas plus de 0,5 molécule d'oxygène pour 100 molécules de carbone.

8. Polymère poly(alpha-oléfine) selon l'une quelconque des revendications 1 à 7, le polymère poly(alpha-oléfine) étant issu d'une charge de départ contenant au moins une alpha-oléfine en C5 à C24.

9. Polymère poly(alpha-oléfine) selon l'une quelconque des revendications 1 à 8, la poly(alpha-oléfine) étant mélangée en une huile pour engrenages, une huile à palier, une huile de circulation, une huile pour compresseurs, une huile hydraulique, une huile pour turbine ou une graisse pour machines.

10. Polymère poly(alpha-oléfine) selon l'une quelconque des revendications 1 à 9, la poly(alpha-oléfine) étant mélangée en un lubrifiant utile dans une boîte de vitesses humide, un système d'embrayage, un palier de soufflante, un multiplicateur de vitesse d'éolienne, un dispositif d'entraînement de pulvérisateur de charbon, une boîte à engrenages de tour de refroidissement, un dispositif d'entraînement de four, un dispositif d'entraînement de machine à papier ou un compresseur rotatif à vis.
